# EUROPÄISCHE PATENTSCHRIFT

(11) **EP 2 828 871 B1**
(45) Veröffentlichungstag und Bekanntmachung des Hinweises auf die Patenterteilung: **12.04.2017**
(21) Anmeldenummer: 13704364.2
(22) Anmeldetag: 14.02.2013
(51) Int. Cl.: H01H 1/14, H01H 1/50, H01H 3/16, H01H 3/38, G06K 7/00, G07F 19/00, G07F 7/08, H01H 27/00

(54) **SCHALTFEDERANORDNUNG**
SWITCH SPRING ARRANGEMENT
SYSTÈME DE RESSORT DE MAN UVRE

(30) Priorität: 22.03.2012 DE 102012005852
(43) Veröffentlichungstag der Anmeldung: 28.01.2015
(73) Patentinhaber: Amphenol-Tuchel Electronics GmbH, 74080 Heilbronnn (DE)
(72) Erfinder: BERTSCH, Michael, 74080 Heilbronn (DE)
(74) Vertreter: Wendels, Stefan
(86) Internationale Anmeldenummer: PCT/EP2013/000428
(87) Internationale Veröffentlichungsnummer: WO 2013/139420

(56) Entgegenhaltungen:
- DE-A1- 19 616 786
- DE-C1- 4 411 345

## Beschreibung

Die Erfindung bezieht sich auf eine Schaltfederanordnung, insbesondere auf eine Schaltfederanordnung für Kartenleser, insbesondere für Chip- und Speicherkartenleser wie z. B. einen Smart-Card-Connector, in dem unterschiedliche Chip- oder Speicherkarten eingesetzt werden können.

In Kartenleser werden üblicherweise Schaltbetätiger oder Schaltfederanordnungen verwendet, um sogenannte Chipkarten wie Smartkarten, Micro-SD-Karten, Transflash-Karten oder andere Kartentypen, bei Einschieben des Kartenlesers zu erkennen, in dem die Schaltfederanordnung von der einzuschiebenden Karte betätigt wird und ein Kontakt entweder geöffnet oder geschlossen wird.

Solche Anordnungen werden als "normally open" oder "normally closed-Kartenleseranordnungen" bezeichnet, wobei "normally open" bedeutet, dass ohne eingesetzte Karte der Kartenanwesenheitsschalter in seinem geöffneten Zustand ist und bei Einschieben der Karte der Kartenanwesenheitsschalter von der Karte in einen geschlossenen Zustand betätigt wird, während im Fall eines "normally closed-Kartenlesers" der Vorgang genau umgekehrt abläuft.

Dokument DE 196 16 786 A1 beschreibt eine Schaltfederanordnung für ein Kartenlesegerät.

Ein Problem bei Schaltfederanordnungen im Stand der Technik ist darin zu sehen, dass bei der immer kleiner werdenden Abmessungen von Kartenlesern die Schaltfederanordnungen und deren Schaltwege vornehmlich durch Toleranzen beim Gebrauch Störungen unterliegen.

So kann es z. B. zu dem Bruch der Schaltfeder kommen, wenn ein Kartenleser während seiner Lebensdauer im Rahmen seiner Schaltbetätigungen bis zu 500.000 Schaltzyklen durchlaufen muss.

Insbesondere bei Zahlterminals und Kartenkontaktiervorrichtungen bei denen täglich mehrere 100 bis 1.000 Lesevorgänge ablaufen, führt dies zu einer kurzen Lebensdauer und es werden aufwendige Reparaturen und Wartungen an den Kartenlesevorrichtungen notwendig.

Ein erstes Problem ist darin zu sehen, dass die Abmessungen, insbesondere die Höhe der aktuellen Kartenleser so gering ausgebildet ist, dass die Schaltfederanordnungen entweder nur kurze Federwege und damit steife Kontakte aufweisen können oder alternativ lange Schaltfedern verwendet werden können, die allerdings zu geringe Kontaktkräfte aufweisen.

Schaltbetätiger in der im Stand der Technik bekannten Ausführung übertragen die Kräfte in der Regel direkt auf den Schalter und gewährleisten bei kleiner Baugröße nur einen geringen Toleranzausgleich. Der Toleranzausgleich ist aber erforderlich, wenn der Schalter z. B. auf Block geht und die Karte weiter auf den Betätiger drückt.

Hierbei ist zu berücksichtigen, dass im Markt auch Kartendickentoleranzen vom Schaltbetätiger abgefangen werden müssen. Es gibt sogenannte Minimum- und Maximum-Karten, d. h. die Kartendicke bewegt sich in der Regel je nach Hersteller am Markt in unterschiedlichen Kartendicken, die innerhalb eines vorgegebenen Toleranzbereiches liegen.

Wenn der Schalter sozusagen auf Block geht, d. h. am Ende seines Betätigungsweges gegen eine feste Konstruktion oder Wand anliegt oder gedrückt wird, werden die Kräfte unmittelbar auf den Schalter übertragen, was zum Bruch des Schalters führen kann. Dies tritt vornehmlich bei "dickeren" Maximum-Karten auf.

Die vorliegende Erfindung hat sich zum Ziel gesetzt, vorbesagte Nachteile zu überwinden und eine Schaltfederanordnung zum Betätigen eines Schalters bereitzustellen, welche eine hohe Betriebssicherheit aufweist und besagte Nachteile ausgleicht bzw. minimiert.

Diese Aufgabe wird gelöst mit einer Schaltfederanordnung gemäß Anspruch 1.

Bevorzugte Ausgestaltungen der Erfindung ergeben sich aus den Unteransprüchen.

Um einen ausreichenden Toleranzausgleich gewährleisten zu können, ist der Grundgedanke der vorliegenden Erfindung, dass der Federarm eines Schaltbetätigers zunächst ausreichend lang ausgelegt wird, was einen positiven Einfluss auf die Baugröße hat.

Mit zunehmender Länge des Federarms nimmt auch die durch den Federarm ausgeübte Federkraft ab, welcher auf den Schalter übertragen werden kann und somit in folge geringerer Kraftübertragung der Schalter weniger belastet wird.
Bei der erfindungsgemäßen Lösung kommen jedoch zwei Federarme zum Einsatz, welche durch Materialraffung einerseits eine Verlängerung erfahren und ferner eine bzw. je eine Berührstelle aufweisen, die durch sich korrespondierende Auskragungen gebildet sind und die dazu dienen, als Zwischenlager zwischen den beteiligten Federamen zu wirken. Auf diese Weise können sich die beteiligten Federarme unabhängig voneinander verformen.

In der Folge lässt sich durch die erfindungsgemäße Ausführungsform von zwei paarweisen Federarmen, die mit einem dazwischen liegenden weiteren Federarmen zusammenarbeiten, die Baugröße minimieren und die zu übertragende Kraft bei gleichzeitig langen Federarmen erhöhen, so dass ausreichende Kraftübertragung auf den Schalter ausgeübt wird.
Hierdurch werden jedoch geringere mechanische Spannungen im Bauteil erzeugt, was die Lebensdauer sowohl der Schaltfederanordnung selbst als auch des durch die Schaltfederanordnung ausgelösten Schalters reduziert und damit die Lebensdauer insgesamt eines Kartenlesers erhöht.
Weitere Vorteile, Ziele und Einzelheiten der Erfindung ergeben sich aus der Beschreibung eines Ausführungsbeispiels anhand der Zeichnungen. In der Zeichnung zeigt:
- Fig. 1: eine Aufsicht auf eine Schaltfederanordnung;
- Fig. 2: eine Seitenansicht einer erfindungsgemäßen Schaltfederanordnung ähnlich der Ansicht gemäß Fig. 1;
- Fig. 3: eine perspektivische Ansicht einer erfindungsgemäßen Schaltfederanordnung gemäß Fig. 1 und Fig. 2;
- Fig. 4: eine Seitenansicht ähnlich der Fig. 2, bei der die Schaltfederanordnung durch eine Karte ein Stück weit betätigt wurde;
- Fig. 5: eine perspektivische Ansicht der betätigten Schaltfederanordnung gemäß Fig. 4.

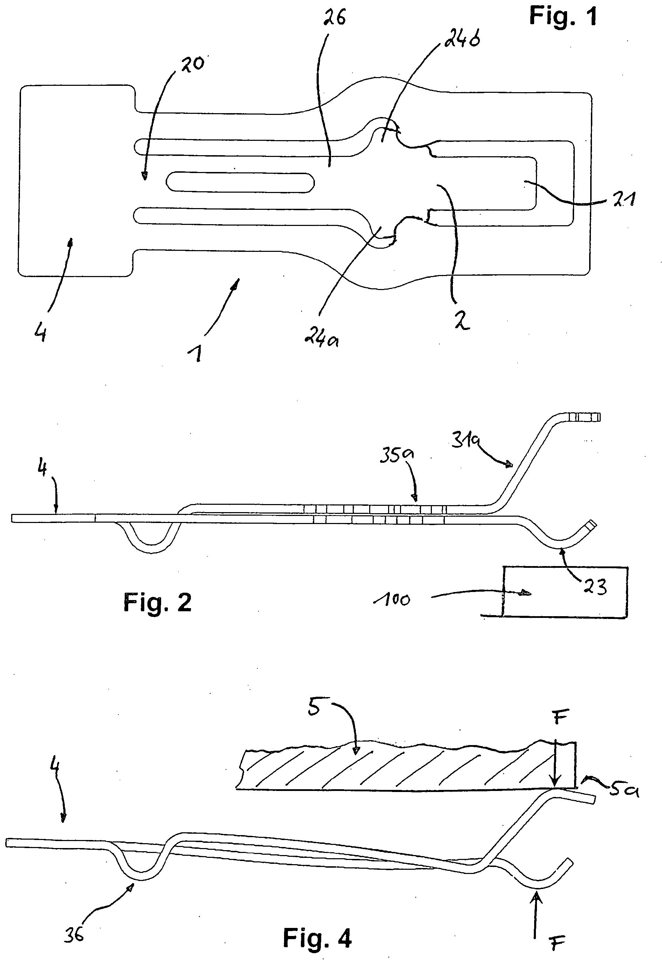

In den Fig. 1 bis Fig. 5 ist ein Ausführungsbeispiel einer erfindungsgemäßen Schaltfederanordnung 1 in unterschiedlichen Ansichten gezeigt.

Die Schaltfederanordnung 1 gemäß Fig. 1 bis Fig. 5 weist vorzugsweise an einer Halteplatte 4 einen ersten Federarm 2 auf, welcher vorzugsweise mittig mit seinem festen Federarmende 20 an der Halteplatte 4 angebunden ist.

Der Federarm 2 erstreckt sich mit einem Federarmabschnitt 26 von der Halteplatte 4 weg und endet an seinem freien Ende 21 bzw. an seinem freien Federarmende 21. Am freien Federarmende 21 befindet sich ein Schaltelement 22, welches in vorteilhafter Ausführungsform mit einer Kontaktkuppe 23 ausgebildet ist, die in Richtung auf einen Schalter 100 orientiert ist. Im Federarmabschnitt 26 befindet sich ein Schlitz 25.

Über die Schlitzlänge des Schlitzes 25 lässt sich die Federeigenschaft und damit die Federkonstante des Federarmes 2 kalibrieren. Seitlich am Federarmabschnitt 26 des Federarms 2 befinden sich diametral gegenüberliegend jeweils eine Auskragung 24a, 26b. Die Auskragungen 24a, 24b sind so ausgebildet, dass sie mit den noch zu beschreibenden Federarmpaaren 3a, 3b bzw. jeweils mit Auskragungen 34a, 34b benachbarter Federarmpaare 3a, 3b durch Betätigung in Kontakt treten können. Anders ausgedrückt sind die Auskragungen zueinander korrespondierend angeordnet.

An der Halteplatte 4 sind jeweils benachbart zum ersten Federarm 2, vorzugsweise in etwa paralleler Lage, ein Federarm 3a und ein Federarm 3b angebunden, welche vorzugsweise spiegelbildlich und damit symmetrisch zum Federarm 2 an der Halteplatte 4 angeordnet sind.

Der Federarm 3a, 3b bildet zusammen ein Federarmpaar 3a, 3b, welche an ihrem der Halteplatte 4 gegenüberliegenden Ende der Federarme 3a, 3b mittels eines Verbindungsabschnittes 30 miteinander verbunden sind.

Der Verbindungsabschnitt 30 ist vorzugsweise als ein Steg zwischen den Enden der Federarme 3a, 3b beabstandet zum ersten Federarm 2 angeordnet.

Mit Vorteil ist der Verlauf der Federarme 3a, 3b so ausgebildet, dass sich nach einem im wesentlichen flachen bzw. ebenen Federarmabschnitt 35a, 35b eine schräge Rampe anschließt bzw. jeweils eine Auflaufschräge 31a, 31 b anschließt, deren Enden miteinander verbunden sind und zwar durch den Verbindungsabschnitt 30. Der Verbindungsabschnitt 30 ist im wesentlichen als ein flacher Auflageabschnitt 32 ausgebildet.

Wird eine Karte in einen Kartenleser mit einer erfindungsgemäßen Schaltfederanordnung eingeschoben, so kann eine Kartenkante entlang der Federarmpaare 3a, 3b über die Auflaufschräge 31 a, 31 b auflaufen und mit ihrer Kartenunterseite auf den Auflageabschnitt 32 drücken, wodurch das Federarmpaar 3a, 3b ausgelenkt wird und zwar in Richtung des ersten Federarms 2.

Im Bereich der Federarmabschnitte 35a, 35b befinden sich korrespondierend in ihrer Lage zu den Auskragungen 24a, 24b des ersten Federarms 2 die Auskragungen 34a, 34b, die so angeordnet sind, dass sich bei Betätigung der Federarmpaare 3a, 3b diese berühren bzw. als Lagerstelle fungieren.

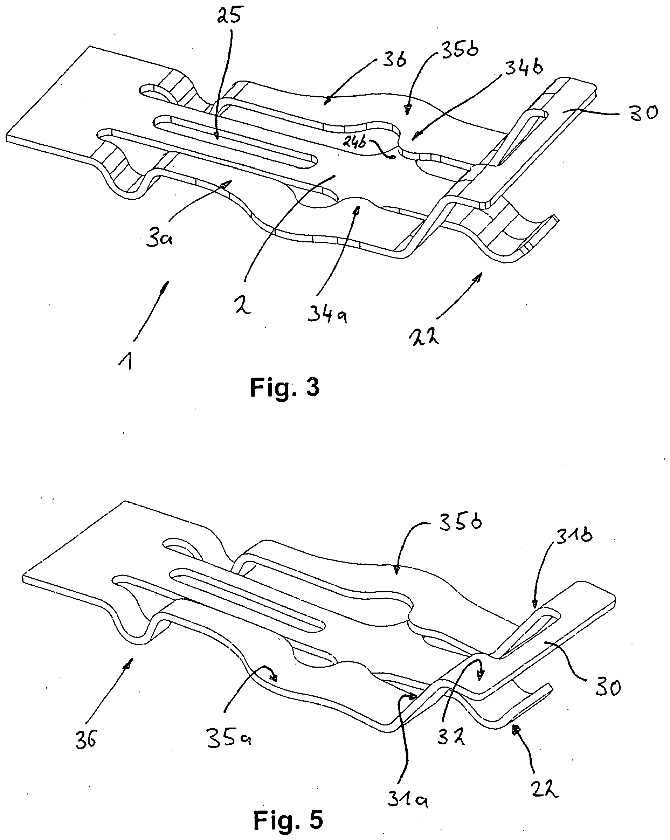

Wie in Fig. 4 und Fig. 5 zu erkennen, lässt sich anhand der beiden Figuren die funktionsweise des erfindungsgemäßen Schaltbetätigers bzw. der erfindungsgemäßen Schaltfederanordnung 1 erläutern.

Die Schaltfederanordnung 1 arbeitet nach dem Doppelbalkenprinzip bzw. doppelten Federbalkenprinzip.

Das Federarmpaar 3a, 3b bildet je einen ersten Federbalken, der sich im wesentlichen in den Ansichten nach oben durchbiegen kann, während der zweite Federarm 2 einen weiteren Federbalken ausbildet, der sich in den Ansichten nach unten durchbiegen kann, so dass die Durchbiegung der Federbalkenlinien in entgegengesetzter Richtung verläuft.

Dies bedeutet, dass sowohl mit maximalen Kartenstärken, so genannten Maxkarten und minimalen Kartenstärken wie Minkarten gearbeitet werden kann.

Drückt eine Kraft F einer Minkarte auf den Auflageabschnitt 32 des Federarmpaares 3a, 3b, so wird dieses in Richtung des zweiten Federarmes betätigt, bis die gegenseitigen Lager 34a, 34b und 24a, 24b somit die Auskragungen 24a, 24b, 34a, 34b in Berührung kommen und den Federarm 2 in Richtung eines Schalters 100 betätigen, bis er auf Block auf dem Schalter auffliegt.

Bei einer Betätigung mit der Minimumkarte biegt sich der Federarm 2 nur minimal durch und erzeugt ausreichend Kontaktfederkraft auf dem Schalter 100.

Wird allerdings die Schaltfederanordnung 1 mit einer Maxkarte betätigt, so liegt die Kontaktkuppe 23 ebenfalls nach Berühren mit dem Schalter 100 auf diesem auf, allerdings wird das Federarmpaar 3a, 3b weiter in folge der erhöhten Kartendicke ausgelenkt.

In Folge der erfindungsgemäßen Konstruktion mittels korrespondierender Federarme kann, obwohl die Schaltkuppe 23 des Schaltelementes 22 des ersten Federarmes 2 auf dem Schalter 100 aufliegt (Blockauflager), sich der Federarm 2 weiter nach unten durchbiegen, wobei die Blockauflage den Schalter nicht zerstört, indem der Federarm 2 elastisch ausweichen kann.

Durch diesen konstruktiven Aufbau lassen sich daher die notwendige Federkraft einerseits und die Toleranzen andererseits in einem idealen Wechselwirkungsverhältnis abbilden.

In einer besonders vorteilhaften Ausführungsform befindet sich jeweils am Federarm 3a, 3b des Federarmpaares 3a, 3b, vorzugsweise an korrespondierenden Stellen, eine Raffung 36. Die Raffung 36 ist als eine im wesentlichen U-förmige Biegung in jeweils den Federarmabschnitten 35a, 35b ausgebildet. Durch die Raffung 36 der Federarmpaare 3a, 3b lässt sich die Federkonstante und damit die Biegerichtung des Federarmpaares 3a, 3b in vorgegebener Weise beeinflussen.

In einer vorteilhaften Ausführungsform ist die Raffung 36 so ausgebildet, dass die Lage der Federarmpaare 3a, 3b etwas oberhalb der Lage des Federarmes 2 angeordnet ist und vorzugsweise im nicht ausgelenkten Zustand der Schaltfederanordnung 1 die Federarme 2, 3a, 3b im wesentlichen in parallelen Ebenen verlaufen.

Diese konstruktive Ausgestaltung ist besonders gut in Fig. 2 in der Seitenansicht erkennbar. In dieser Ansicht lässt sich auch die im wesentlichen gebogene bzw. U-förmige Raffung der Federarmpaare 3a, 3b erkennen. Durch diese Raffung kann die Lage des Federarmpaares 3a, 3b durch geeignete Biegung oberhalb der Lage des ersten Federarmes 2 angeordnet werden, wie dies ebenfalls in der Seitenansicht der Fig. 2 deutlich zu erkennen ist.

Da folglich die Raffung unterhalb des Federarmes 2 angeordnet ist, jedoch die Lager 34a, 34b von oben auf die Auskragungen bzw. Lager 24a, 24b drücken, kommt es zu einer entgegengesetzten Durchbiegung der Federbalken der jeweiligen Federarme, sobald eine Karte mit der Kraft F auf den Verbindungsabschnitt 30 der Federarmpaare 3a, 3b drückt, wie dies deutlich in Fig. 4 und Fig. 5 zu erkennen ist.

Das obere Federarmpaar 3a, 3b biegt sich nach oben durch, während sich der Federarm 2 zur Betätigung des Schalters 100 nach unten, also in entgegengesetzte Durchbiegungsrichtung durchbiegt, so dass in der Seitenansicht ein Art Zwischenraum zwischen den beabstandeten Federarmen 2, 3a, 3b entsteht und zwar zwischen der Halteplatte 4 und der Berührstelle der Lager bzw. Auskragungen 24a, 24b und 34a, 34b.

Wird eine Karte 5 in einem nicht dargestellten Kartenleser bzw. in einer Kartenkontaktiervorrichtung bewegt, so trifft das Kartenende 5a auf eine Auflaufschräge 31 a, 31 b der Federarmpaare 3a, 3b und die Unterseite der Karte 5 schiebt sich auf den Verbindungsabschnitt 30 bzw. auf den im wesentlichen flachen Abschnitt des Verbindungsabschnittes und zwar den Auflageabschnitt 32. Drückt nun die Karte 5 mit einer Kraft F die Federarmpaare 3a, 3b nach unten, so kommt es an der Berührstelle der Federarme 2, 3a, 3b und zwar an den Auskragungen 24a, 24b und 34a, 34b zu einer lageartigen Auflagerung auf den Federarm 2 der folglich vom Federarmpaar 3a, 3b betätigt wird und zwar mit seinem Schaltelement 22 auf einen darunter befindlichen Schalter 100.

### Bezugszeichenliste

### Schaltfederanordnung

- 1: Schaltfederanordnung
- 2: erster Federarm
- 3a, 3b: Federarmpaar
- 4: Halteplatte
- 5: Karte
- 5a: Kartenende

- 20: festes Federarmende
- 21: freies Federarmende
- 22: Schaltelement
- 23: Kontaktkuppe
- 24a, 24b: Auskragungen
- 25: Schlitz
- 26: Federarmabschnitt

- 30: Verbindungsabschnitt
- 31a, 31b: Auflaufschräge
- 32: Auflageabschnitt
- 34a, 34b: Auskragungen
- 35a, 35b: Federarmabschnitt
- 36: Raffung

- 100: Schalter

- F: Kraft

## Patentansprüche

1. Schaltfederanordnung (1) zum Betätigen eines Schalters (100), umfassend
a) einen ersten Federarm (2) mit einer Kontaktkuppe (23) an seinem freien Ende (21) zum Betätigen eines Schalters (100), welcher unterhalb der Kontaktkuppe (23) angeordnet ist und wobei der erste Federarm (2) über seitliche Auskragungen (24a, 24b) verfügt;
b) einen zweiten Federarm (3), der durch eine Karte (5) betätigbar ist und dabei der erste Federarm (2) von dem zweiten Federarm (3) betätigt wird, **dadurch gekennzeichnet, dass**
c) der zweite Federarm (3) aus einem Federarmpaar von zwei im Wesentlichen parallel angeordneten Federarmen (3a, 3b) ausgebildet wird, an denen seitliche Auskragungen (34a, 34b) vorgesehen sind, die in ihrer Lage korrespondierend benachbart zu den Auskragungen (24a, 24b) des ersten Federarmes (2) angeordnet sind, so dass bei Betätigen des zweiten Federarmes (3) in Richtung des ersten Federarmes (2) die Auskragungen (34a, 34b) des zweiten Federarmes (3) mit den Auskragungen (24a, 24b) des ersten Federarmes (2) zusammenwirken und der erste Federarm (2) betätigt wird.

2. Schaltfederanordnung (1) gemäß Anspruch 1, **dadurch gekennzeichnet, dass** der erste Federarm (2) mit seinem festen Ende (20) an einer Halteplatte (4) der Schaltfederanordnung (1) befestigt ist.

3. Schaltfederanordnung (1) gemäß Anspruch 1 oder 2, **dadurch gekennzeichnet, dass** der erste Federarm (2) zwischen seinem freien Ende (21) und seinem festen Ende (20) ein Federarmabschnitt (26) aufweist, wobei die Auskragungen (24a, 24b) seitlich am Federarmabschnitt (26) angeordnet sind.

4. Schaltfederanordnung (1) gemäß Anspruch 2, **dadurch gekennzeichnet, dass** die beiden Federarme (3a, 3b) des zweiten Federarmes (3) an ihrem festen Ende an der Halteplatte (4) befestigt sind.

5. Schaltfederanordnung (1) gemäß einem der vorhergehenden Ansprüche, **dadurch gekennzeichnet, dass** die beiden Federarme (3a, 3b) des zweiten Federarmes (3) mittels eines Verbindungsabschnittes (30) miteinander verbunden sind.

6. Schaltfederanordnung (1) gemaß Anspruch 2 **dadurch gekennzeichnet, dass** jeder der beiden Federarme (3a, 3b) des zweiten Federarmes (3) zwischen der Halteplatte (4) und den Auskragungen (34a, 34b) über eine Raffung (36) verfügt.

7. Schaltfederanordnung (1) gemäß Anspruch 6, **dadurch gekennzeichnet, dass** die jeweilige Raffung (36) der beiden Federarme (3a, 3b) des zweiten Federarmes (3) als ein im Wesentlichen U-förmiger in Richtung des ersten Federarmes (2) gebogener Abschnitt ausgebildet ist

8. Schaltfederanordnung (1) gemäß einem der vorhergehenden Ansprüche, **dadurch gekennzeichnet, dass** die beiden Federarme (3a, 3b) des zweiten Federarmes (3) jeweils über einen schrägen Abschnitt bzw. eine Auflaufschräge (31 a, 31 b) verfügen und zwar der Gestalt, dass die Auflaufschräge (31a, 31 b) als ein Biegeabschnitt der beiden Federarme (3a, 3b) des zweiten Federarmes (3) ausgebildet ist.

## Claims

1. Switch spring arrangement (1) for operating a switch (100), comprising
a) a first spring arm (2), with a contact dome (23) at its free end (21) for operating a switch (100) which is arranged beneath the contact dome (23) and wherein the first spring arm (2) has lateral projections (24a, 24b);
b) a second spring arm (3) which can be operated by a card (5) and in the process the first spring arm (2) is operated by the second spring arm (3), **characterized in that**
c) the second spring arm (3) comprising a pair of spring arms is formed by two spring arms (3a, 3b) which are arranged substantially in parallel and at which lateral projections (34a, 34b) are provided which, in their position, are arranged correspondingly adjacent to the projections (24a, 24b) of the first spring arm (2), so that, when the second spring arm (3) is operated in the direction of the first spring arm (2), the projections (34a, 34b) of the second spring arm (3) interact with the projections (24a, 24b) of the first spring arm (2) and the first spring arm (2) is operated.

2. Switch spring arrangement (1) according to Claim 1, **characterized in that** the first spring arm (2) is attached, by way of its fixed end (20), to a retaining plate (4) of the switch spring arrangement (1).

3. Switch spring arrangement (1) according to Claim 1 or 2, **characterized in that** the first spring arm (2) has, between its free end (21) and its fixed end (20), a spring arm section (26), wherein the projections (24a, 24b) are arranged on the sides of the spring arm section (26).

4. Switch spring arrangement (1) according to Claim 2, **characterized in that** the two spring arms (3a, 3b) of the second spring arm (3) are attached, at their fixed end, to the retaining plate (4).

5. Switch spring arrangement (1) according to any one of the preceding claims, **characterized in that** the two spring arms (3a, 3b) of the second spring arm (3) are connected to one another by means of a connecting section (30).

6. Switch spring arrangement (1) according to Claim 2, **characterized in that** each of the two spring arms (3a, 3b) of the second spring arm (3) has a gathered portion (36) between the retaining plate (4) and the projections (34a, 34b).

7. Switch spring arrangement (1) according to Claim 6, **characterized in that** the respective gathered portion (36) of the two spring arms (3a, 3b) of the second spring arm (3) is in the form of a substantially U-shaped section which is bent in the direction of the first spring arm (2).

8. Switch spring arrangement (1) according to any one of the preceding claims, **characterized in that** the two spring arms (3a, 3b) of the second spring arm (3) each have an inclined section or a run-on bevel (31 a, 31 b), specifically designed such that the run-on bevel (31 a, 31 b) is in the form of a bent section of the two spring arms (3a, 3b) of the second spring arm (3).

## Revendications

1. Arrangement de ressorts de commutation (1) destiné à actionner un commutateur (100), comprenant
a) un premier bras de ressort (2) muni d'une calotte de contact (23) à son extrémité libre (21) pour actionner un commutateur (100), lequel est disposé au-dessous de la calotte de contact (23) et le premier bras de ressort (2) disposant de porte-à-faux (24a, 24b) latéraux;
b) un deuxième bras de ressort (3) qui peut être fixé par le biais d'une carte (5) et le premier bras de ressort (2) étant ainsi actionné par le deuxième bras de ressort (3), **caractérisé en ce que**
c) le deuxième bras de ressort (3) est constitué d'une paire de bras de ressort composée de deux bras de ressort (3a, 3b) sensiblement disposés en parallèle, sur lesquels se trouvent des porte-à-faux (34a, 34b) latéraux qui dans leur position sont disposés de façon adjacente correspondante aux porte-à-faux (24a, 24b), de sorte que lors de l'actionnement du deuxième bras de ressort (3) en direction du premier bras de ressort (2), les porte-à-faux (34a, 34b) du deuxième bras de ressort (3) coopèrent avec les porte-à-faux (24a, 24b) du premier bras de ressort (2) et le premier bras de ressort (2) est actionné.

2. Arrangement de ressorts de commutation (1) selon la revendication 1, **caractérisé en ce que** le premier bras de ressort (2) est fixé par son extrémité fixe (20) à une plaque de maintien (4) de l'arrangement de ressorts de commutation (1).

3. Arrangement de ressorts de commutation (1) selon la revendication 1 ou 2, **caractérisé en ce que** le premier bras de ressort (2) possède une portion de bras de ressort (26) entre son extrémité libre (21) et son extrémité fixe (20), les porte-à-faux (24a, 24b) étant disposés latéralement sur la portion de bras de ressort (26).

4. Arrangement de ressorts de commutation (1) selon la revendication 2, **caractérisé en ce que** les deux bras de ressort (3a, 3b) du deuxième bras de ressort (3) sont fixés à la plaque de maintien (4) au niveau de leur extrémité fixe.

5. Arrangement de ressorts de commutation (1) selon l'une des revendications précédentes, **caractérisé en ce que** les deux bras de ressort (3a, 3b) du deuxième bras de ressort (3) sont reliés ensemble au moyen d'une portion de liaison (30).

6. Arrangement de ressorts de commutation (1) selon la revendication 2, **caractérisé en ce que** chacun des deux bras de ressort (3a, 3b) du deuxième bras de ressort (3) dispose d'un fronçage (36) entre la plaque de maintien (4) et les porte-à-faux (34a, 34b).

7. Arrangement de ressorts de commutation (1) selon la revendication 6, **caractérisé en ce que** le fronçage (36) correspondant des deux bras de ressort (3a, 3b) du deuxième bras de ressort (3) est réalisé sous la forme d'une portion courbée sensiblement en forme de U en direction du premier bras de ressort (2).

8. Arrangement de ressorts de commutation (1) selon l'une des revendications précédentes, **caractérisé en ce que** les deux bras de ressort (3a, 3b) du deuxième bras de ressort (3) disposent respectivement d'une portion inclinée ou d'un plan incliné (31 a, 31 b), et ce de telle manière que le plan incliné (31 a, 31 b) est réalisé sous la forme d'une portion de flexion des deux bras de ressort (3a, 3b) du deuxième bras de ressort (3).
